# EUROPEAN PATENT APPLICATION

(11) **EP 3 778 756 A1**
(43) Date of publication of application: **17.02.2021**
(21) Application number: 19778414.3
(22) Date of filing: 14.03.2019
(51) Int. Cl.: C08L 23/08, C08K 3/04, C08K 3/36, C08K 5/14, C08L 45/00, C09K 3/10

(54) **RUBBER COMPOSITION AND METHOD FOR REDUCING ADHESION TO SURFACE OF KNEADER USING SAME**

(30) Priority: 28.03.2018 JP 2018062110
(71) Applicant: NOK Corporation, Minato-ku Tokyo 105-8585 (JP)
(72) Inventor: KOGA, Atsushi, Fujisawa-shi, Kanagawa 251-0042 (JP)
(74) Representative: Beckmann, Claus
(86) International application number: PCT/JP2019/010522
(87) International publication number: WO 2019/188339

(57) **Abstract**

A rubber composition having a reduced adhesion to the surface of a kneading machine, particularly an open roll kneading machine, in consideration of keading processability, the rubber composition comprising 20 to 60 parts by weight of carbon black having a DBP oil absorption of 100 ml/100 g or more and an iodine value of 75 to 90 g/kg based on 100 parts by weight of an ethylene/butene/5-ethylidene-2-norbornene terpolymer. Stable and safe productivity of the rubber composition can be obtained, and the rubber composition is effectively used for seal parts, for which a high pressure gas sealing function is particularly required in a low temperature environment, e.g., -30 to -60°C.

## Description

### TECHNICAL FIELD

The present invention relates to a rubber composition and a method for reducing adhesion to the surface of a kneading machine using the same. More particularly, the present invention relates to an ethylene/butene/5-ethylidene-2-norbornene terpolymer rubber composition and a method for reducing adhesion to the surface of a kneading machine using the same.

### BACKGROUND ART

Since ethylene/propylene/diene copolymer rubber (EPDM), which exhibits sealing properties at high and low temperatures, has no unsaturated bond in the main chain, rubber strength and low temperature properties are in conflict with the increase in the ethylene content. Therefore, it is difficult to achieve, using EPDM compositions, sealing properties at a low temperature exceeding a certain temperature limit.

In order to obtain a rubber molded product having particularly excellent low temperature rubber characteristics while maintaining the same level of hardness as conventional rubber molded products using EPDM, the present applicant has previously proposed a rubber composition comprising an ethylene/butene/ethylidene norbornene terpolymer [EBENB], carbon black, a hardness modifier, and a crosslinking agent (Patent Document 1).

It is described that the carbon black used in this rubber composition is not particularly limited, and that known carbon black, such as FEF carbon black and SRF carbon black, can be used. In each Example, it is merely described that carbon black is simply used.

Further, Patent Document 2, which discloses an ethylene/butene/non-conjugated polyene copolymer, indicates that various types of carbon black are used as reinforcing agents in a rubber composition comprising this copolymer. In particular, it is described that Asahi #55G (GPF), Asahi #50HG (Special Grade) and Asahi #60G (FEF) (all produced by Asahi Carbon Co., Ltd.), and Seast FEF (FEF) (produced by Tokai Carbon Co., Ltd.) are preferable. In the Examples, Asahi #60G (produced by Asahi Carbon Co., Ltd.), which is FEF carbon black, is used.

However, EBENB has a very high polymer copolymer adhesion. Due to adhesion to the surface of a kneading machine, particularly an open roll kneading machine, the productivity is extremely low in the rubber composition kneading process. In addition, there are problems, such as safety risk due to the intrusion of the operator's hand or arm into dangerous areas near the bank during reverse operation, and a concern for contamination of foreign matter etc.

### PRIOR ART DOCUMENTS

### PATENT DOCUMENTS

Patent Document 1 : WO 2017/170190 A1
Patent Document 2 : JP-A-2011-213822

### OUTLINE OF THE INVENTION

### PROBLEM TO BE SOLVED BY THE INVENTION

An object of the present invention is to provide an ethylene/butene/5-ethylidene-2-norbornene terpolymer rubber composition to which carbon black having specific properties is added, the rubber composition being intended to reduce adhesion to the surface of a kneading machine in consideration of kneading processability.

### MEANS FOR SOLVING THE PROBLEM

The above object of the present invention can be achieved by a rubber composition having a reduced adhesion to the surface of a kneading machine, the rubber composition comprising 20 to 60 parts by weight of carbon black having a DBP oil absorption of 100 ml/100 g or more and an iodine value of 75 to 90 g/kg based on 100 parts by weight of an ethylene/butene/5-ethylidene-2-norbornene terpolymer.

Further, a method for reducing adhesion to the surface of a kneading machine using this rubber composition is provided.

### EFFECT OF THE INVENTION

The rubber composition of the present invention can effectively reduce adhesion to the surface of a kneading machine, particularly an open roll kneading machine, by compounding carbon black having specific properties. Further, stable and safe productivity can be obtained.

This rubber composition is used as a seal parts, for which a high pressure gas sealing function is particularly required in a low temperature environment, e.g., about - 30 to -60°C.

### EMBODIMENTS FOR CARRYING OUT THE INVENTION

In the rubber composition, the characteristics of rubber materials, such as EBENB and EPDM, greatly affect the material costs of the entire rubber composition and the production efficiency. EBENB is superior in cold resistance as compounded with EPDM; therefore, a rubber composition having desired low temperature rubber characteristics can be achieved with a less compounding amount than EPDM, and the material costs can be reduced as the entire rubber composition.

Moreover, EBENB is more flexible as compounded with EPDM, is thus excellent in processability, such as kneadability, dispersibility and moldability, and greatly improves the production efficiency. Therefore, the costs in the production process can be reduced.

Thus, according to the rubber composition of the present invention using EBENB, the production costs of rubber molded products can be reduced, as compared with conventional rubber compositions using EPDM, in terms of the material costs and production efficiency.

As EBENB, any one obtained by copolymerizing ethylene and butene with a small amount (about 0.1 to 20 wt.%, preferably about 3 to 15 wt.%) of 5-ethylidene-2-norbornene component can be used. In practice, commercial products, such as Metallocene EBT (produced by Mitsui Chemicals, Inc.), can be used as they are.

The iodine value of EBENB is preferably about 3 to 20 g/100 g, more preferably about 5 to 18 g/100 g. Within the above range, it is possible to prevent deterioration of rubber molded products due to excellent heat aging resistance and weather resistance, and to maintain a stable molecular state even in a low temperature environment, thereby improving low temperature sealing properties.

Further, EBENB has a lower polymer viscosity represented by Mooney viscosity ML₁₊₄ (100°C) and superior processability (e.g., kneadability and moldability), as compared with EPDM. Therefore, the use of EBENB in place of EPDM improves productivity, such as molding efficiency, consequently reducing the production costs.

The Mooney viscosity ML₁₊₄ (100°C) of EBENB is preferably about 10 to 45, more preferably about 15 to 35. If the Mooney viscosity is too low, the compression set may increase, and the tensile strength may decrease. In contrast, if the Mooney viscosity is too high, the characteristics may be improved, but the processability may be deteriorated. The Mooney viscosity ML₁₊₄ (100°C) can be determined according to the definition of JIS K 6300-1: 2013.

The content of the ethylene component in EBENB is preferably about 60 to 80 wt.%, and more preferably about 65 to 75 wt.%. Within this range, the glass transition temperature Tg of EBENB shows the minimum value, and the cold resistance is improved.

EBENB and EPDM can be used in combination, as long as the objects of the present invention are not impaired. Further, hardness modifiers, such as silicic acid, calcium carbonate, magnesium carbonate, clay, talc, bentonite, sericite, mica, calcium silicate, alumina hydrate, and barium sulfate; and resin-based fillers, such as polyethylene, polypropylene, polystyrene, coumarone-indene resin, melamine resin, and phenol resin, can also be used in combination, if necessary.

As carbon black [CB], one having a DBP oil absorption of 100 ml/100 g or more and an iodine value of 75 to 90, preferably 80 to 85 g/kg, is used. This is mainly HAF type carbon black; however, HAF-LS-SC (S-315) and HAF-LS (N-326) are not included because their DBP oil absorption is equal to or less than the specified value, although they are of HAF type.

If the DBP oil absorption is equal to or lower than this range, adhesion to the surface of the target kneading machine cannot be reduced at all. Further, if the iodine value is equal to or lower than this range, the effect of reducing adhesion to the surface of the kneading machine is not sufficient. In contrast, if the iodine value is equal to or greater than this range, the dispersibility of the filler is not sufficient, in addition to the insufficient adhesion reducing effect.

Carbon black having such properties is used at a ratio of about 20 to 60 parts by weight based on 100 parts by weight of EBENB. If the compounding ratio is less than this range, the effect of reducing adhesion is not sufficiently exhibited. In contrast, if the compounding ratio is greater than this range, the rubber may not be wound, particularly when using an open roll kneading machine.

Moreover, carbon black having a DBP oil absorption of 100 ml/100 g or more and an iodine value of 30 to 130 g/kg, excluding 75 to 90 g/kg, can be used in combination at a ratio of 50 parts by weight or less based on 100 parts by weight of EBENB. However, the total amount of both types of carbon black is preferably about 20 to 80 parts by weight.

Further, silica can be used as a filler in combination at a ratio of about 50 parts by weight or less based on 100 parts by weight of EBENB. When silica is used, it is preferable to use various silane coupling agents. However, the total amount of carbon black having specific properties and silica is preferably about 20 to 100 parts by weight.

The crosslinking agent is mainly preferably an organic peroxide. Examples of organic peroxides include tert-butyl peroxide, dicumyl peroxide, 2,5-dimethyl-2,5-ditert-butylperoxyhexane, 2,5-dimethyl-2,5-di-tert-butylperoxyhexine-3, tert-butylcumyl peroxide, 1,3-ditert-butylperoxyisopropylbenzene, 2,5-dimethyl-2,5-dibenzoylperoxyhexane, tert-butyl peroxybenzoate, tert-butyl peroxyisopropyl carbonate, n-butyl-4,4-di-tert-butylperoxyvalerate, and the like.

The amount of crosslinking agent to be compounded is preferably about 0.5 to 10 parts by weight, more preferably about 1 to 5 parts by weight, based on 100 parts by weight of EBENB Within the above range, it is possible to prevent that molding cannot be performed due to foaming during vulcanization. Further, since the crosslinking density becomes good, the resulting product is likely to have sufficient physical properties.

Moreover, a master batch containing the above-mentioned organic peroxide can also be used. Such a masterbatch is preferable from the viewpoint that kneadability and dispersibility can be improved during preparation of the rubber composition.

Further, a crosslinking accelerator may be contained, if necessary. As the crosslinking accelerator, triallyl isocyanurate, triallyl cyanate, liquid polybutadiene, N,N'-m-phenylenedimaleimide, trimethylolpropane trimethacrylate, or the like can be used. By compounding and adding a suitable amount of crosslinking accelerator, crosslinking efficiency can be improved, and further heat resistance and mechanical properties can be improved; thus, the stability as a seal part can also be improved.

The rubber composition preferably further contains a processing aid and a lubricant. Examples of the processing aid (plasticizer) include process oils containing aliphatic hydrocarbon as a main component, such as PW380 and PW220 (produced by Idemitsu Kosan Co., Ltd.). These can be used singly or in combination. In particular, process oils have a lower molecular weight as compared with paraffin wax having a similar chemical structure, and are thus more preferable from the viewpoint that they have a unique effect that cannot be achieved when paraffin wax is compounded. As the lubricant, for example, Diamid O-200 and Diamid L-200 (produced by Nippon Kasei Chemical Company Limited), which are fatty acid amides, are used.

The amounts of the processing aid and the lubricant to be compounded are each preferably about 1 to 20 parts by weight, more preferably about 3 to 15 parts by weight, based on 100 parts by weight of EBENB. Within the above range, kneading processability is improved, and the occurrence of oil bleeding can be prevented.

In addition to the above components, the rubber composition may suitably contain, if necessary, compounding agents generally used in the rubber industry, such as plasticizer, acid acceptors, and antioxidants, as rubber compounding agents. The amount of rubber compounding agent to be compounded is preferably about 300 parts by weight or less based on 100 parts by weight of EBENB.

The rubber composition can be prepared by kneading the various materials using a kneading machine, such as a single screw extruder, a twin screw extruder, a roll, a Banbury mixer, a kneader, or a high shear mixer.

Moreover, the rubber composition can be crosslinked by pressure vulcanization generally at about 150 to 230°C for about 0.5 to 30 minutes using an injection molding machine, a compression molding machine, or the like. Further, after the above primary vulcanization is performed, a secondary vulcanization may be performed, if necessary, in order to reliably vulcanize the inside of the vulcanized product. The secondary vulcanization can be generally performed by oven heating at about 150 to 250°C for about 0.5 to 24 hours.

The rubber molded product obtained by crosslinking and molding the rubber composition according to the present invention has excellent low temperature rubber characteristics particularly at -50°C and is suitable as a rubber molded product to be used in a low temperature environment (e.g., about -40°C to -60°C). Such a rubber molded product preferably has a TRIO value of -50°C or lower, as measured by the low temperature elastic recovery test specified in JIS K6261: 2006.

Further, the rubber molded product of the present invention preferably has an appropriate hardness. For example, when the rubber molded product is an O-ring, the Type A durometer hardness specified in JIS K6253-1: 2012 corresponding to ISO 18517 is preferably 65 to 95.

Examples of the obtained rubber molded product include seal parts used for sealing high pressure gas of low temperature, insulators, vibration isolators, sound insulators, and the like. Among them, the rubber molded product is suitably used as a seal part used in a low temperature environment and having excellent low temperature sealing properties, particularly as a seal part for high pressure gas (e.g., high pressure hydrogen) equipment.

The shape of the rubber molded product according to the present invention is not particularly limited, and can be various shapes according to its application. Examples of the shape as the seal part include O-rings, packings, sheets, and the like.

### EXAMPLES

The following describes the present invention with reference to Examples.

### Example 1

| | |
|---|---|
| EBENB (Metallocene EBT, produced by Mitsui Chemicals, Inc.) | 100 parts by weight |
| HAF CB (Asahi #70, produced by Asahi Carbon Co., Ltd. DBP oil absorption amount: 101 ml/100 g ; iodine value: 80g/kg) | 50 parts by weight |
| Zinc oxide | 5 parts by weight |
| Stearic acid | 1 part by weight |
| Fatty acid amide lubricant (Diamide O-200, produced by Nippon Kasei Chemical Company Limited ; purified oleic acid amide) | 2 parts by weight |
| Plasticizer (Diana Process Oil PW-380, produced by Idemitsu Kosan Co., Ltd.); | 5 parts by weight |
| Antioxidant (Irganox 1010, produced by BASF Japan) | 1 part by weight |
| Organic peroxide (Percumyl D, produced by NOF Corporation; dicumyl peroxide,) | 3 parts by weight |
| Crosslinking accelerator (Taic, produced by Nippon Kasei Chemical Company Limited.) | 0.5 parts by weight |

Among the above components that were aimed at a crosslinked product having a JIS A hardness of 75, the components other than an organic peroxide and a crosslinking accelerator were each kneaded with a kneader. Then, the organic peroxide and the crosslinking accelerator were added and kneaded with an open roll.

The obtained open roll kneaded material was evaluated for adhesion to the surface of the kneading machine and filler dispersibility. Further, the hardness of the crosslinked product was measured.

Evaluation of adhesion to the surface of the kneading machine:
○: There was no adhesion and stable kneading was possible.
Δ: There was adhesion to the higher rotation speed roll, but kneading was possible.
× : It was impossible to continue kneading.

Filler dispersibility evaluation: The filler dispersibility was evaluated by a
dispersion grader.
○: 97 to 100
Δ: 90 to less than 97
× : 0 to less than 90

Rubber hardness (JIS Duro A): according to JIS K6253-1: 2012 corresponding to
ISO 18517

A durometer hardness tester was used.

Plate-like crosslinked rubber (thickness: 2 mm) obtained by performing pressure vulcanization at 180°C for 8 minutes and oven vulcanization (secondary vulcanization) at 180°C for 24 hours was measured.

### Example 2

In Example 1, the same amount (50 parts by weight) of HAF-HS CB (Seast 3H, produced by Tokai Carbon Co., Ltd.; DBP oil absorption amount: 126ml/100 g; iodine value: 84 g/kg) was used in place of the HAF CB.

### Example 3

In Example 1, the amount of the HAF CB was changed to 25 parts by weight, and 30 parts by weight of FEF CB (Asahi #60, produced by Asahi Carbon Co., Ltd.; DBP oil absorption amount: 114ml/100 g; iodine value: 43 g/kg) was further used.

### Example 4

In Example 1, the amount of the HAF CB was changed to 40 parts by weight, and 45 parts by weight of silica (Nipsil VN3, produced by Tosoh Silica Corporation) was further used.

### Comparative Examples 1 to 7

In Example 1, the predetermined amount of another CB was used in place of the HAF CB.

**Table 1**

| Comparative Example | Grade | Product name | DBP oil absorption amount (ml/100 g) | Iodine value (g/kg) | Compounded amount (part by weight) |
|---|---|---|---|---|---|
| 1 | ISAF | Asahi Carbon Co., Ltd.; Asahi #80 | 113 | 118 | 45 |
| 2 | ISAF-HS | Asahi Carbon Co., Ltd.; Asahi #78 | 125 | 120 | 45 |
| 3 | SRF-HS | Tokai Carbon Co., Ltd.; Seast SVH | 140 | 30 | 65 |
| 4 | FEF | Asahi Carbon Co., Ltd.; Asahi # 60 | 114 | 43 | 60 |
| 5 | ISAF-LS | Tokai Carbon Co., Ltd.; Seast 600 | 75 | 111 | 45 |
| 6 | HAF-LS | Asahi Carbon Co., Ltd.; Asahi #70L | 75 | 85 | 50 |
| 7 | GPS | Asahi Carbon Co., Ltd.; Asahi #55 | 87 | 25 | 70 |

Table 2 below shows the evaluation and measurement results obtained in the above Examples and Comparative Examples.

**Table 2**

| Example | Evaluation of adhesion | Dispersibility evaluation | Hardness |
|---|---|---|---|
| Example 1 | ○ | ○ | 76 |
| Example 2 | ○ | ○ | 76 |
| Example 3 | ○ | ○ | 74 |
| Example 4 | ○ | ○ | 75 |
| Comparative Example 1 | Δ | Δ | 77 |
| Comparative Example 2 | Δ | Δ | 75 |
| Comparative Example 3 | Δ | ○ | 75 |
| Comparative Example 4 | Δ | ○ | 75 |
| Comparative Example 5 | × | ○ | 75 |
| Comparative Example 6 | × | ○ | 74 |
| Comparative Example 7 | × | ○ | 75 |

## Claims

1. A rubber composition having a reduced adhesion to the surface of a kneading machine, the rubber composition comprising 20 to 60 parts by weight of carbon black having a DBP oil absorption of 100 ml/100 g or more and an iodine value of 75 to 90 g/kg based on 100 parts by weight of an ethylene/butene/5-ethylidene-2-norbornene terpolymer.

2. The rubber composition according to claim 1, wherein the carbon black having a DBP oil absorption of 100ml/100 g or more and an iodine value of 30 to 130 g/kg, excluding 75 to 90 g/kg, is further used in combination at a ratio of 50 parts by weight or less.

3. The rubber composition according to claim 1, wherein silica is further used in combination at a ratio of 50 parts by weight or less.

4. The rubber composition according to claim 1, wherein the processing aid or the lubricant is used in combination at a ratio of 1 to 20 parts by weight.

5. A seal parts comprising peroxide-crosslinked molded product of the rubber composition according to claim 1.

6. A method for reducing adhesion to the surface of a kneading machine using the rubber composition comprising 20 to 60 parts by weight of carbon black having a DBP oil absorption of 100 ml/100 g or more and an iodine value of 75 to 90 g/kg based on 100 parts by weight of an ethylene/butene/5-ethylidene-2-norbornene terpolymer.
